# EUROPEAN PATENT SPECIFICATION

(11) **EP 0 180 470 B1**
(45) Date of publication and mention of the grant of the patent: **14.07.1993**
(21) Application number: 85307878.0
(22) Date of filing: 31.10.1985
(51) Int. Cl.: G11B 20/18, H03M 13/22, G11B 20/10

(54) **Control system for deinterleaving memories in digital audio reproducing apparatus**
Regelungssystem zum Entschachteln von Speichern in einer numerischen Wiedergabeanordnung
Système de commande pour désimbriquer des mémoires dans un appareil de reproduction numérique

(30) Priority: 31.10.1984 JP 229234/84
(43) Date of publication of application: 07.05.1986
(73) Proprietor: KABUSHIKI KAISHA TOSHIBA, Kawasaki-shi, Kanagawa-ken 210 (JP)
(72) Inventor: Nagumo, Masahide c/o Patent Division Toshiba, Minato-ku Tokyo (JP)
(74) Representative: Muir, Ian R.

(56) References cited:
- EP-A- 0 086 566
- EP-A- 0 092 403

## Description

The present invention relates generally to a digital audio reproducing apparatus, and more particularly to a method for deinterleaving memories in digital audio reproducing apparatuses.

### Description of the prior art

As is well known in the field of audio equipment, digital recording and reproducing systems utilizing a pulse-code-modulation (hereinafter simply referred to as PCM) technique have been used for recording and reproducing with high density and high fidelity as far as possible. The digital recording and reproducing system for the audio equipment has been called the digital audio system. In the digital audio system, recording media for digitized data digitally coded from the analogue information signal are used, such as conventional magnetic tapes and discs. Since its many audio characteristics, however, are independent of the quality of the recording medium, the digital audio system is evaluated as remarkably superior to the conventional analogue recording and reproducing system.

An optical compact disc (hereinafter simply referred to as a CD), for example, is known for the recording medium on which the audio signal is recorded by the PCM. In the recording of the PCM data on the CD, an EFM (Eight to Fourteen Modulation) technique is further utilized for the benefit of reproducing the CD so as to extract bit synchronizing signals easily from the recorded PCM data, and to perform accurately a data slice on a reproduced signal from the CD, which is generally known as an RF signal since it has a radio frequency, by narrowing a frequency band of the recorded PCM data. The EFM is a technique whereby the digitized data are divided into groups of eight bits and then modulated into fourteen-bit data words for easy reproduction of the CD. Twenty-four of the data words make a frame, consisting of five hundred and eighty bits together with four P-parity check words P, four Q-parity check words Q, frame synchronising data bits, control data bits, and margin bits. It has been previously proposed to use a so-called cross-interleaving technique in a data transmission system that is effective in correcting burst errors. According to this cross-interleaving technique, P-parity check words P are provided for error correction to the data words contained in an original arrangement state in the frame, while Q-parity checks words Q are provided for error correction to twenty eight of the words, except Q-parity check words Q, contained in an arrangement state converted through the cross-interleaving technique with a predetermined order.

In the reproduction process, an RF signal or a signal picked up from the CD as a round sinusoidal waveform signal is formed into a rectangular waveform signal, and then are carried out: an EFM demodulation; deinterleaving; an error correction; and D/A (digital to analogue) conversion; in that order.

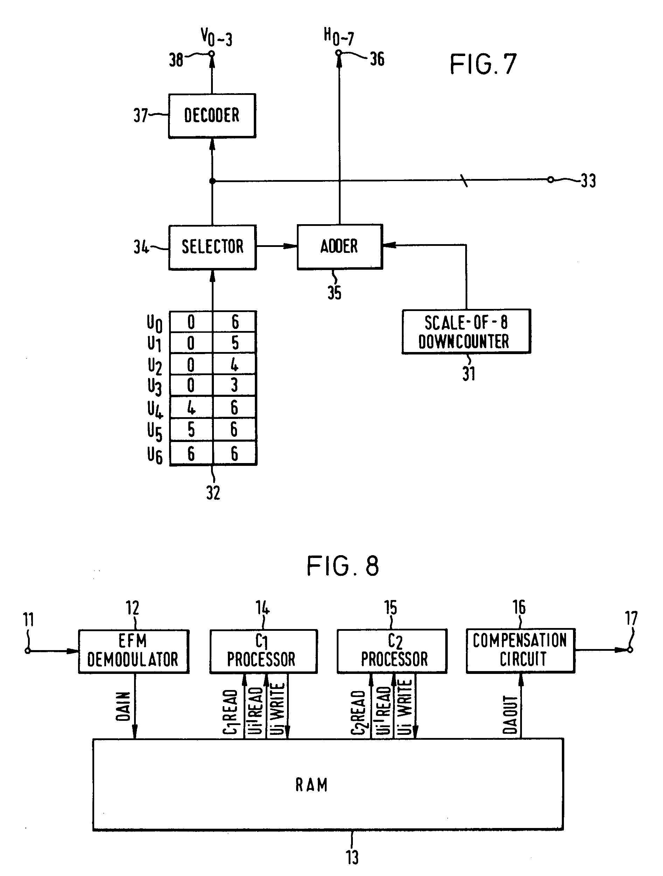

Figure 8 shows a block diagram of an example of the reproduction section of the digital audio system. In the drawing, a reproduced signal from a CD is supplied to an EFM demodulator 12 through an input terminal 11 after having been formed into the rectangular waveform and them demodulated to the original eight-bit PCM data word from the fourteen-bit EFM modulated words therein. The data words are stored in a read/write memory or a random access memory (RAM) 13. A write processing (DAIN) of the data words to RAM 13 is controlled by a clock signal extracted from phase components of the reproduced signal so that the data words written into RAM 13 are affected by jitter according to irregularities of the disc rotating system. And RAM 13 is provided with buffer memory areas necessary for absorbing the jitter.

The data words stored in RAM 13 are read out and supplied into a first error correction processor (referred to simply as C1 processor hereinafter) 14 in order of thirty two words (referred to as symbols hereinafter) or groups of words U0 to U31 converted by the cross-interleaving technique; and then checked for errors in the symbols. C1 processor 14 corrects some error symbol in the symbols to the correct symbol by using P-parity check words P and then writes again the correct symbol into RAM 13 in place of the error symbol. C1 processor 14 has an ability for correcting two error symbols.

The symbols processed by the C1 processor 14 are again read out from RAM 13 and supplied into a second error correction processor (referred to simply as C2 processor hereinafter) 15 in the order of twenty eight symbols or groups of symbols U0 to U27 except Q-parity check word symbols and then checked for errors in the symbols. C2 processor 15 corrects some error symbol in the symbols to the correct symbol by using Q-parity check words Q and then writes again the correct symbol into RAM 13 in place of the error symbol. C2 processor 15 has an ability for correcting three error symbols.

After the error corrections at C1 processor 14 and C2 processor 15, right data symbols stored in RAM 13 are read out again and supplied into an error compensation circuit 16 wherein the data symbols are further processed by a known error compensation technique for error symbols left uncorrected by C1 processor 14 and C2 processor 15. The data words compensated for by error compensation circuit 16 are applied to a D/A converter (not shown) through an output terminal 17 connected to error compensation circuit 16.

Wherein, the deinterleaving is operated by reading symbols out from RAM 13 with a predetermined delay. The predetermined delay is accomplished by arranging the symbols in channels Uₒ-U₂₇.

Channels U0 - U27 are prescribed to have individually the respective delays 27D, 26D, ...and 0D, where D equals four frame periods F, i.e. D = 4F, and one frame period F includes twenty eight symbols. RAM 13 is therefore provided with memory areas capable of storing for the longest delay 27D.

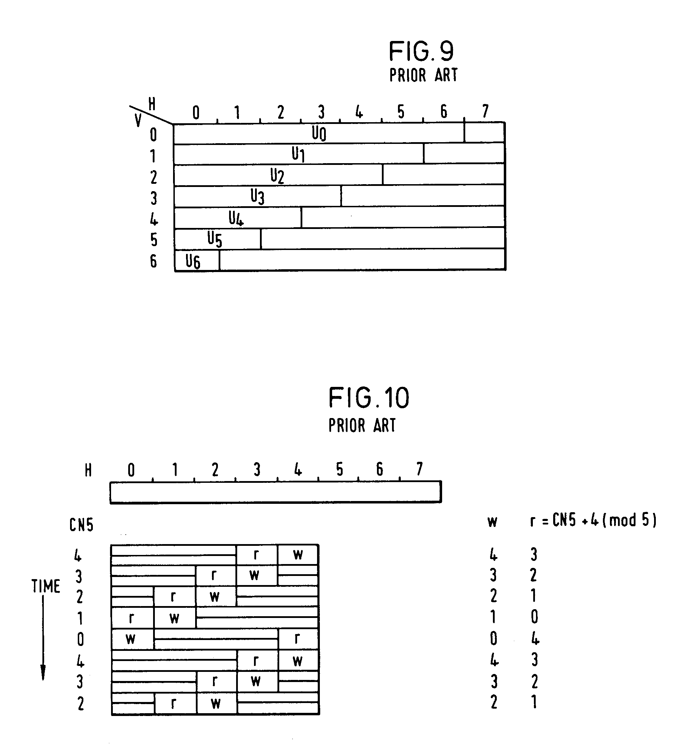

Now, an example of RAM 13 will be explained, where seven channels U0 -U6 are adopted and the respective delays are assumed to be 6F, 5F, ... and 0F. In this example, RAM 13 is allocated its memory area as shown in Figure 9. Row H and column V in the drawing respectively mean lower and upper addresses of RAM 13. Write and read operations of symbols of a channel, e.g. channel U2, are repeatedly made as shown in Figure 10, wherein letters r and w represent respectively a read address and a write address of a symbol of channel U2. Since channel U2 is assigned from "0" to "4" of lower address H as to its write area, a scale-of-5 downcounter (not shown) is used for an address generator. Count values "0" to "4" of the scale-of-5 downcounter are used as write addresses w as they are, and values given by the modulo-5 addition to the count values, i.e. write addresses w. Practically, a scale-of-8 downcounter which is mass-manufactured commercially and easily available is used in place of the scale-of-5 downcounter. In Figure 10, CN5 represents the count values of the scale-of-5 downcounter (practically a part of the scale-of-8 downcounter), and mod5 means the modulo-5 operation.

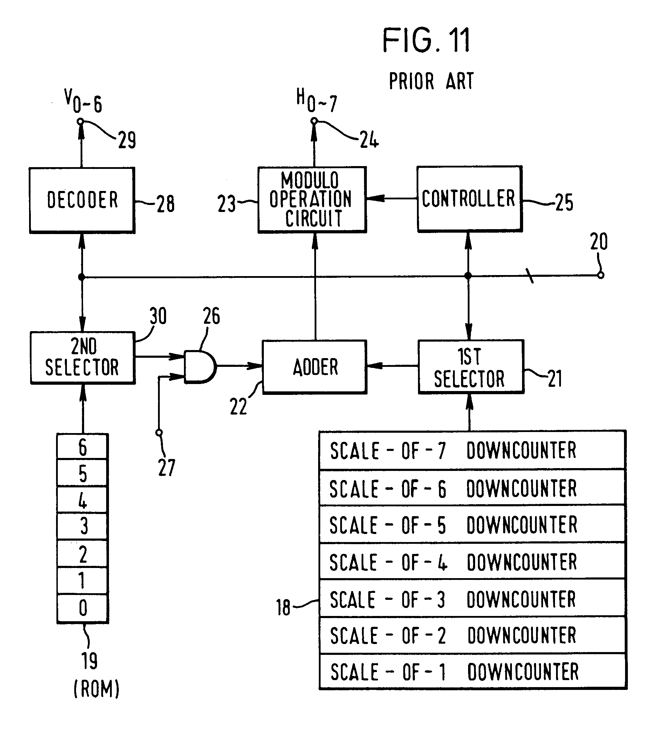

Therefore, a circuit diagram as shown in Figure 11 has been conceived for generating write addresses w and read addressses r for all symbols of channels U0 to U6 as to the example shown in Figure 9. In Figure 11, there are provided a group of downcounters 18 and a ROM (Read only Memory) 19. Downcounter group 18 and ROM 19 are coupled respectively to first and second selectors 21, 30 which are connected to an input terminal 20. The downcounters of scale-of-7 to scale-of-1 respectively generate lower addresses H for writing respective symbols of channels U0 to U6 into RAM 13, while ROM 19 supplies delay data of 6F to 0F corresponding to respective channels U0 to U6.

Input terminal 20 receives data respectively indicating channels U0 to U6, a read request signal (referred to as "read signal" hereinafter) and a write request signal (referred to as "write signal" hereinafter). Channels U0 to U6 are supplied from EFM demodulator 12, C1 processor 14 and C2 processor 15 in accordance with any stage in the course of the deinterleaving process (see Figure 8). The read signal and the write signal are applied from a CPU (Central Processing Unit, not shown).

In the write mode of RAM 13 (see Fig. 8), symbols of channels U0 to U6 and the write signal are supplied to input terminal 20. First selecter 21 selects a downcounter corresponding to the channel under operation from downcounter group 18 in response to the write signal. Counts CN7-i of the selected scale-of-(7-i) downcounter are supplied to RAM 13 (see Fig. 8) sucessively as lower addresses H therefor through an adder 22, a modulo operation circuit 23,and a first output terminal 24, in that order, where letter i means any integer from 1 to 6. At the time, however, modulo operation circuit 23 is deactivated by a controller 25 coupled between input terminal 20 and itself so as to allow to pass therethrough counts CN7-i of the selected scale-of-(7-i) downcounter as they are. Controller 25 deactivates modulo operation circuit 23 in response to the write signal supplied from input terminal 20. At the time, moreover, a second input of an AND gate 26 whose first input and output are coupled respectively to second selector 30 and adder 22 is held at a low (L) level. Then AND gate 26 fails to transmit the output of ROM 19 to adder 22 so that adder 22 transmits counts CN7-i of the selected scale-of-(7-i) downcounter as they are to RAM 13 (see Figure 8). Accordingly, counts CN7-i are supplied to RAM 13 as lower addresses H. A decoder 28 coupled to input terminal 20 generates upper addresses V in response to the write signal and supplies upper addresses V to RAM 13 through second output terminal 29.

In the read mode of RAM 13 (see figure 8), symbols of channels U0 to U6 and the read signal are supplied to input terminal 20. First selecter 21 selects a downcounter, e.g. scale-of-(7-i) downcounter, from downcounter group 18 in response to the read signal so that counts CN7-i of the selected scale-of-(7-i) downcounter are supplied to adder 22. At the same time, second selector 30 provides a delay amount datum (6-i)D selected from ROM 19 in response to the read signal to first input of AND gate 26. The second input of AND gate 26 is held at a high (H) level in the road mode of RAM 13 so as to transmit selected delay data 6-1 therethrough. Then adder 22 adds selected delay data 6-i to counts CN7-i of the selected scale-of-(7-i) downcounter and then supplies the sum resulting from the addition to modulo operation circuit 23. Modulo operation circuit 23 makes its modulo-5 operation on the sum and then provides its modulo-5 sum output as lower addresses H to RAM 13 through first output terminal 24, while decoder 28 generates upper addresses V in response to the read signal and supplies generated upper addresses V to RAM 13 through second output terminal 29.

However, a conventional deinterleaving apparatus comprising the previously conceived circuit arrangement as shown in Figure 11 for generating the write addresses and the read addresses for the RAM has been required to have many downcounters in response to the number of channels. Therefore a structure of the conventional deinterleaving apparatus has been complicated very much. And moreover, the conventional deinterleaving apparatus has been expensive because there have been left in the RAM tolerable memory areas unused.

EP-A-123322 (relevant under Article 54 paragraphs (3) and (4) in three of the designated states, namely France, Germany and the Netherlands) discloses a method for indicating memory addresses of data sets arranged in a leading channel and other successive channels arranged within a single area of memory to provide different delays equal to integral multiples of a prescribed time interval. This method can be used as a method for de-interleaving cross-interleaved symbols, wherein a plurality of cross-interleaved symbols are written into and read out from a RAM, part of whose memory space is arranged as a sequence of locations for storing symbols, each holding a single symbol.

### SUMMARY OF THE INVENTION

Accordingly, an object of the present invention is to provide a method for deinterleaving memories in digital reproducing apparatus which has a simple structure for generating write addresses and read addresses for a RAM for storing symbols.

Another object of the present invention is to provide a method for deinterleaving memories in digital reproducing apparatus which is able to use most of the memory capacity of a RAM for storing symbols effectively, or to use a RAM for storing symbols in a small quantity of memory areas.

For the contracting states France, Germany and the Netherlands the present invention provides a method for deinterleaving cross-interleaved symbols wherein each symbol is subjected to a predetermined deinterleaving delay respectively corresponding to its channel and the symbols of the same channel are to have the same deinterleaving delay, by using a RAM (Random Access Memory), part of whose memory space is arranged as a set of areas, for storing symbols, each area of the set having substantially the same predetermined storage capacity, such that at least one of the areas is used to accommodate symbols of a plurality of channels and such that the space of each area apart from any buffer storage space that might be included therein is substantially filled by its symbols the number of symbols being stored and belonging to same channel being dependent on the delay of the respective channel, symbols of said plurality of channels are written into and read out from the RAM (Random Access Memory) within the same area without overlapping.

For the contracting state the United Kingdom the present invention provides a method for deinterleaving cross-interleaved symbols wherein each symbol is subjected to a predetermined deinterleaving delay respectively corresponding to its channel and the symbols of the same channel are to have the same deinterleaving delay, by using a RAM (Random Access Memory) part of whose memory space is arranged as a single area or as a set of areas, for storing symbols, each area having substantially the same predetermined storage capacity, such that the space of each area apart from any buffer storage space that might be included therein is substantially filled by its symbols the number of symbols being stored and belonging to the same channel being dependent on the delay of the respective channel, symbols of said plurality of channels are written into and read out from the RAM (Random Access Memory) within the same area without overlapping.

Additional objects, advantages and features of the present invention will further become apparent to persons skilled in the art from a study of the following description and of the accompanying drawings, in which:

### BRIEF DESCRIPTION OF THE DRAWINGS

Figure 1 is a diagram for illustrating an allocation of memory areas of a RAM for storing channels according to an embodiment of the present invention.

Figure 2 is a diagram showing the memory area of upper address C, which is exemplified from Figure 1 for illustrating relations between addresses for processing channels and delays thereof.

Figure 3 shows diagrams for illustrating transitions of the addresses in Figure 2.

Figure 4 is a circuit diagram for generating write addresses and read addresses of channels for a RAM according to the present invention.

Figures 5(a) to 5(c) are diagrams for illustrating an allocation of memory areas of a RAM for channels and modifications thereof according to the principle of the present invention.

Figure 6 shows a diagram for illustrating transitions of read addresses and write addresses for a combination of channels exemplified from the diagram of Figure 5(a).

Figure 7 is a block diagram for generating the write addresses and the read addresses in Figure 6.

Figure 8 shows a block diagram of an example of the reproducing section of the digital audio system in which the deinterleaving apparatus of the present invention and the like are included.

Figure 9 is a diagram showing a memory area of a RAM in the conventional deinterleaving apparatus.

Figure 10 shows a diagram for illustrating transitions of the read addresses and the write addresses in Figure 9.

Figure 11 is a block diagram for generating the write addresses and the read addressses in Figure 10.

### DESCRIPTION OF THE PREFERRED EMBODIMENTS

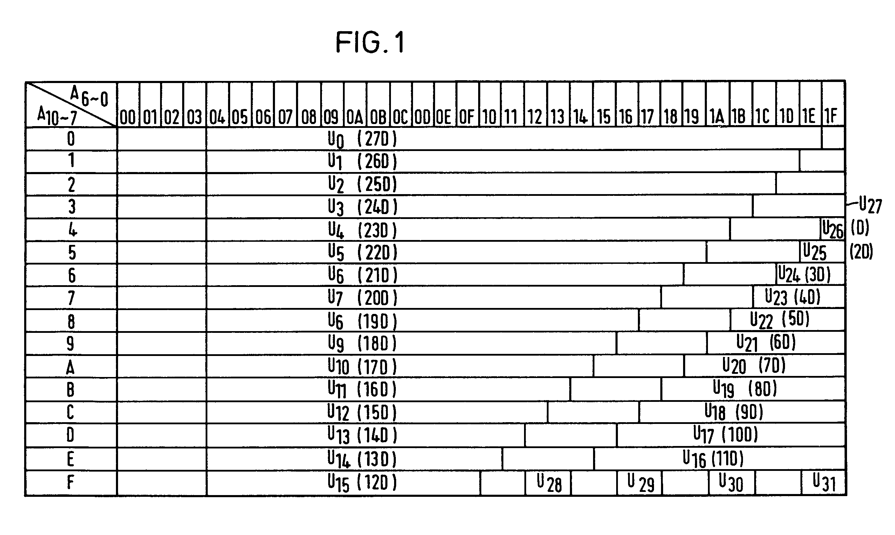

The present invention will now be described in detail with reference to the accompanying drawings, namely, Figures 1 to 6 and 8. Throughout the drawings, like reference numerals and letters are used to designate like or equivalent elements for the sake of simplicity of explanation.

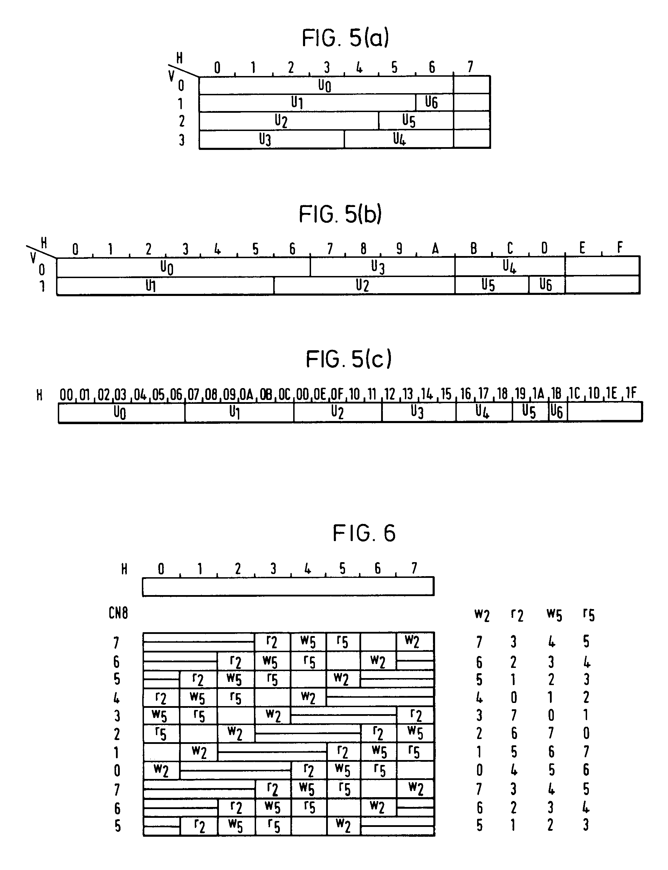

Before describing embodiments of the control system for deinterleaving memories in digital reproducing apparatus according to the present invention, it is necessary to describe briefly the principle of the present invention. This will be done by referring to Figure 5, Figure 6 and Figure 8.

There will now be described a simplified example of a RAM for processing channels in referring to Figure 5, where seven channels U0 -U6 are adopted, like the prior conceived example described previously in referring to Figures 9 to 11. Respective delay amounts of channels U0 to U6 are also assumed as 6F, 5F, ... and 0F. RAM 13 is allocated its memory areas as shown in Figure 5(a). One of the memory areas is arranged to store a channel with the longest delay amount, while other memory areas are respectively arranged to store a combination of two of the other channels whose delay amounts are different from each other. That is, there are provided in the embodiment four memory areas with respective upper addresses 0 to 3. The memory area with upper address 0 is arranged to store channel U0, while the other three memory areas with respective-upper addresses 1 to 3 are arranged to store a combination of two channels respectively U1 and U6, U2 and U5, and U3 and U4. That is: the second longest channel U1 is combined with the shortest channel U6; the third longest channel U2 is combined with the second shortest channel U5 and the fourth longest channel U3 is combined with the third shortest channel U4 Write and read operations of any one combination of the channels, e.g. U2 and U5, are repeatedly made as shown in Figure 6, wherein r2 and w2 represent respectively the read address and the write address of channel U2, while r5 and w5 represent respectively the read address and the write address of channel U5. Further the combination of channels U2 and U5 is allocated memory areas of seven units length with lower addresses H including a blank area designated as lower address 7 so that a scale-of-8 downcounter (not shown) is used for generation of lower addresses 0 to 7. In Figure 6, CN8 means the count values of the scale-of-8 downcounter. Count values "0" to "7" of the scale-Of-8 downcounter are used as write addresses w2 for channel U2 as they are, while values given by adding 4 as the delay amount for channel U2 by modulo-8 addition to write addresses w2, i.e. the count values of the scale-Of-8 downcounter,are used as read addresses r2 therefor. On the other hand, write addresses w5 for channel U5 are given by adding a 1 by modulo-8 addition to write addresses w2 for separating themselves from write addrersses w2, while read addresses r5 are given by adding 1 as the delay amount for channel U5 by modulo-8 addition to write addresses w5.

That is the operations for generating the above addresses w2, r2, w5 and r5 are given by following equations:

$\text{w2 = CN8}$
$\text{r2 = CN8 + 4}$
$\text{w5 = CN8 + 4 + 1 = CN8 + 5}$
$\text{r5 = CN8 + 5 + 1 = CN8 + 6}$

where + means modulo-8 addition. As results of the modulo-8 operations in the above equations, however, the bit contents of addresses r2, w5 and r5 are the same as the corresponding original bit contents before modulo-8 operations except for the carry data thereof, as shown in the following table.

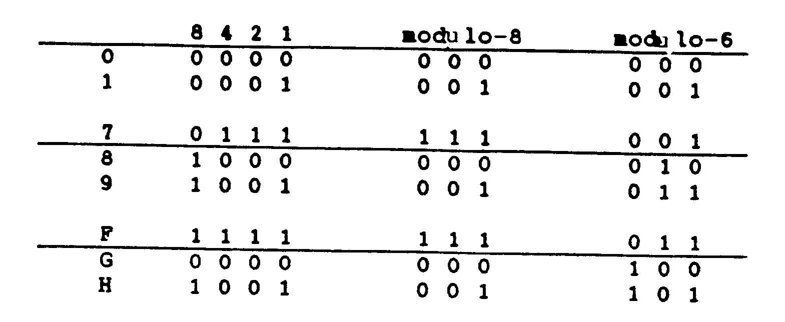

In the table, modulo-6 operations are also included as an example of other modulo operations for a comparison with the modulo-8 operations. As seen from the table, the bit contents resulting from modulo-6 operations are different from the corresponding original bit contents before modulo-6 operations. Therefore, the modulo-6 operations, and the like other than the modulo-8 operation, require some complicated calculations to convert the bit contents, while the modulo-8 operations are easily made by merely ignoring the carry data. In other words, the respective sums in the above equations are used as the write addresses and the read addresses for r2, w5 and r5 in the present invention as they are, without performing any modulo operations.

According to respective addresses w2, r2, w5 and r5 generated as above, symbols channels U2 and U5 are written into or read from RAM 13 (see Figure 8) without overlapping each memory area with the other and keeping necessary delays channels, themselves, as shown in Figure 6. Concerning other channels namely U1, U3, U4, and U6, write and read addresses therefor are generated in the like manner as described above, by only adding individual necessary delay amount data to the counts of the scale-of-8 downcounter.

Therefore, a circuit arrangement as shown in Figure 7 has been newly originated for generating write addresses w and read addressses r for all channels U0 to U6 of the example shown in Figure 5. In Figure 7, there are provided a scale-of-8 downcounter 31 and a ROM (Read Only Memory) 19. ROM 19 is coupled to an adder 22 through only a selector 30 which are connected to an input terminal 20. While the scale-of-8 downcounter 31 is coupled to adder 22 direly. Scale-of-8 downcounter 31 generates lower addresses H for writing respective symbols of channels U0 to U6 into RAM 13 (see Figure 8), while ROM 19 stores two groups of fixed data respectively predetermined in correspondence with channels U0 to U6; a first group to be added to the counts of the scale-of-8 downcounter 31 in the write mode of channels U0 to U6, and a second group to be added to the counts of scale-of-8 downcounter 31 in the read mode of channels U0 to U6. Input terminals 20 receives data respectively indicating symbols of channels U0 to U6, the read signal and the write signal from EFM demodulator 12, C1 processor 14 and C2 processor 15 (see Figure 8), and then provides the data to selector 30 and a decoder 28 which is connected to a second output terminal 29.

In the write mode of RAM 13 (see Figure 8), the write signal is supplied to input terminal 20 from a CPU (central processing unit, not shown) together with symbols of channels U0 to U6 from EFM demodulator 12, C1 processor 14 or C2 processor 15. Second selector 30 reads suitable delay data out from the first group of ROM 19 and then provides it to adder 22. On the other hand, the counts CN8 of scale-of-8 downcounter 31 are supplied to adder 22. Adder 22 adds the selected delay data from the first group of ROM 19 to the counts CN8 of the scale-of-8 downcounter and then supplies the sum resulting from the addition as lower addresses H to first output terminal 24 directly without making any modulo operations. The sums, i.e. lower addresses H on first output terminal 24, are then applied to RAM 13. At the same time, decoder 28 generates upper addresses V corresponding to the supplied channels U0 to U6 in response to the write signal.

In the read mode of RAM 13 (see Figure 8), lower addresses H and upper addresses V are generated in the same manner as described above. However, selector 30 reads suitable delay data to be added to the counts CN8 out from the second group of ROM 19.

As easily understood from the above consideration on the principle of the present invention, counter means for generating addresses is settled by only one scale-of-8 downcounter. Further any modulo operations are not all required practically. The circuit arrangement for generating lower addresses H and upper addresses V is very simple and the RAM for storing symbols in the course of deinterleaving operations uses its memory areas effectively without leaving them unused.

The allocation of the memory areas of the RAM for the respective channels J0 to U6 is able to be modified in various ways, e.g., as shown in Figure 5(b) or 5(c) instead of Figure 5(a). In the modification shown by Figure 5(b), there are provided two memory areas with upper addresses indicated by V: one memory area with upper address 0 stores U0, U3,and U4; while the other memory area,with upper address 1, stores U1, U2, U5, and U6. In the modification shown by Figure 5(c), there is provided only one memory area with upper address indicated by V. The memory stores all channels U0 to U6 in the same area with one upper address.

A practical embodiment of the present invention which has been made on the basis of above principle will now be described in detail by reference to Figures 1 to 4 and 8. Referring now to Figure 1,which illustrates an allocation of memory areas of a RAM for storing channels U0 to U31, some memory areas with upper address (hereinafter referred as row) indicated by V are prepared for the storage of a pair of channels While some other rows are prepared to store only one channel , and one of the rows is prepared to store a plurality of channels numbering more than two. That is combinations of two channelseach, U3 and U27, U4 and U26, U5 and U25,...and, U14 and U16, are stored in rows 4 to E, pair by pair; while channels U0, U1 and U2, are respectively stored in rows 0, 1,and 2, one by one. And a combination of channel U15 and parity channel U28 to U31 is stored in row F. In Figure 1, A₆₋₀ and A₁₀₋₇ respectively designate the lower addresses and the upper addresses of RAM 13 (see Figure 8). Further numerals with letter D in parentheses after respective channels U0 to U26 indicate respectively delay channels data given thereto. Also, the rest of the memory areas for channels are left for absorbing jitter components of the channels.

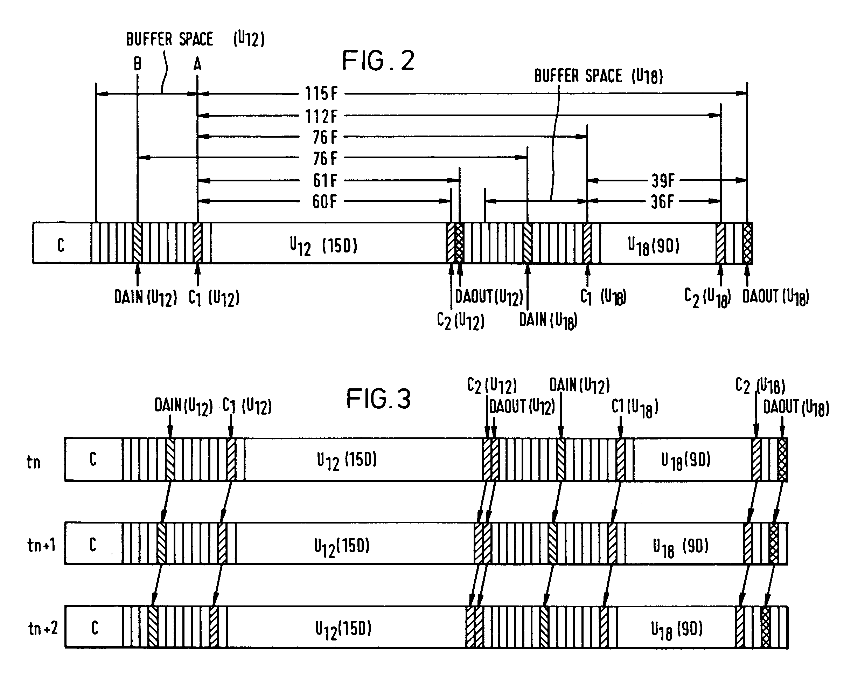

Referring now to Figure 2, there is shown a diagram showing the memory area with upper address C or row C, which is exemplified from Figure 1 for illustrating relations between addresses for processing channels and delays therefor. In Figure 2, the exemplified row C which stores the combination of channels U12 and U18 is indicated in length by frame unit F. There will be described in detail, hereinafter, an operation for generating the write and the read addresses for the combination of channels U12 and U18 in accordance with Figure 2. A first counter (described later) is provided and its count value A is placed in the illustrated position in front of channel U12 as the address for C1 processing (i.e., the first error correction described before) on the symbols of channel U12 at C1 processor 14 (see Figure 8). A second counter (described later) is provided and its count value B is placed in the illustrated position in front of the position of count A as the address for inputting channel U12 to RAM 13 (see Figure 8). The second counter counts under control of phase components extracted from an RF signal reproduced from a CD so that count value B is attended by jitters according to irregularities of a disc rotating system. Therefore, a buffer area with a length of 12F is prepared for absorbing the jitter as shown in Figure 2 so that count B is allowed to fluctuate in the buffer area without overlapping the other area in row C. On the other hand, the first counter counts under control of a reference clock signal generated from a conventional stable quartz oscillator so that the position of count A is kept accurately without fluctuating.

An address for C2 processing (i.e., the second error correction described before) of symbols of channel U12 by C2 processor 15 (see Figure 8) is generated by adding 60, i.e. four times the delay 15D of channel U12, to count A of the first counter. An address for outputting channel U12 from RAM 13 is also generated by adding 61 to count A of the first counter. Therefore, the addresses for channel U12 can be summarized as follows;

$\text{DAIN(U12) = B}$
$\text{C1(U12) = A}$
$\text{C2(U12) = A + 60}$
$\text{DAOUT(U12) = A + 61}$

Addresses for channel U18 are generated in a like manner as described above so that they are also able to be summarized as follows;

$\text{DAIN(U18) = B + 76}$
$\text{C1(U18) = A + 76}$
$\text{C2(U18) = A + 112}$
$\text{DAOUT(U18) = A + 115}$

Where the numerals 60, 61, 76, 112, and 115, correspond. to the fixed data stored in ROM 19 of Figure 7. By the way, address DAIN(U18) for inputting symbols of channel U18 into RAM 13 is generated based on count B of the second counter. Therefore, another buffer area with a length of 12F is prepared for absorbing the jitter during the operation of inputting symbols of channel U18 into RAM 13 as shown in Figure 2.

Whenever a series of the operations for generating the addresses from DAIN(U12) to DAOUT(U18) finishes, the addresses shift rightwards each by one unit of frame F as three transition states in Figure 3. The addresses shift to left side position of the row at a next operation after they have reached the right side position thereof. And then they shift rightwards by one frame F at the next operation step.

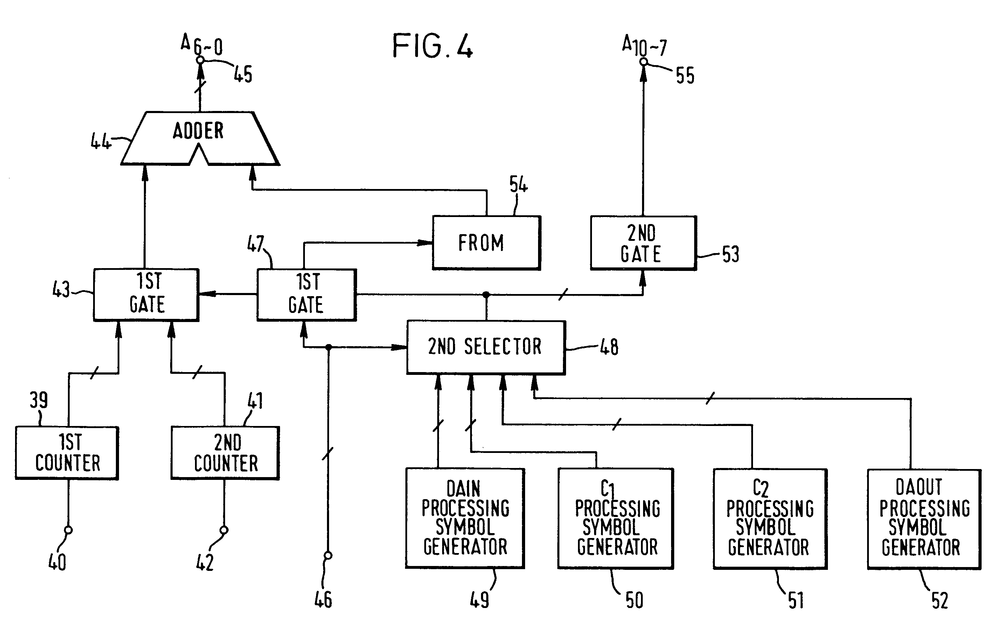

Referring now to Figure 4, a circuit diagram for generating the addresses for processing the above respective operations, DAIN(U12) operation through DAOUT(U18) operation for row C according to one embodiment of the the present invention will be explained in detail hereinafter. In Figure 4, there are provided a first and a second counter 39, 41 which comprise seven-bit binary counters. First counter 39 receives through a first input terminal 40 a reference clock signal generated by a conventional quartz oscillator (not shown) as described in reference to C1(U12) processing in Figure 2, and then executes its count A down under control of the reference clock signal. The quartz oscillator supplies every one pulse of the reference clock signal to first input terminal 40 whenever a series of operations for channels e.g. a series of operations such as DAIN(U12) operation through DAOUT(U18) operation in a same row, e.g. a memory area as to one of upper addresses A₁₀₋₇ row C,(see Figure 2) has been finished. Count A of first counter 39 is counted down one by one to shift its address position leftwards in row C in response to every pulse of the reference clock signal. Second counter 41 receives through a second input terminal 42 phase components extracted from an RF signal reproduced from a CD as described in reference to DAIN(U12) processing in Figure 2, and then executes its count B down under the control of the reference clock signal.

Counts A and B of first and second counters 39, 41 are applied to a first input of an adder 44 through a first selector 43. First selector 43 has three inputs,whose first and second inputs are respectively coupled to first and second counters 39, 41 and one output which is coupled to the first input of adder 44. Adder 44 has another input, i.e. a second input coupled to a ROM 54,and an output coupled to RAM 13 (see Figure 8) through a first output terminal 45. Adder 44 supplies its output as the lower addresses A₆₋₀ for RAM 13.

Other timing signals for operating the above DAIN, C1, C2 and DAOUT processings are supplied to a third input terminal 46 from a CPU (not shown). The timing signals on third input terminal 46 are supplied to a first input of a gate 47 and an input of a second selector 48. First gate 47 has another input, i.e. a second input, and has two outputs, i.e. first and second ouputs. Second selector 48 has four other inputs respectively connected to a DAIN processing channel generator 49, a C1 processing channel generator 50, a C2 processing channel generator 51 and a DAOUT processing channel generator 52. Of these, DAIN processing channel generator 49 and C1 processing channel generator 50 generate thirty two channels consisting of twenty four data channels U0 to U23, four P-parity channels U24 to U27, and four Q-parity channels U28 to U31; while C2 processing channel generator 51 and DAOUT processing channel generator 52 generate twenty eight channels U0 to U27 other than Q-parity channels U28 to U31.

Second selector 48 selects one of the channel supplied from channel generators 49 to 52 in response to a timing signal supplied from third input terminal 46 and transmits binary code data corresponding to the selected channel to the second input of first gate 47 and an input of a second gate 53. First gate 47 controls first selector 43 in response to the timing signal supplied from third input terminal 46 and the binary code data corresponding to the selected channel from second selector 48,so that first selector 43 introduces count B of second counter 41 to adder 44 only at a time of DAIN processing. At the same time, first gate 47 controls ROM 54 to produce one of the fixed data which are stored in ROM 54 corresponding to respective rows 1 to F as to upper addresses A₁₀₋₇. Therefore, adder 44 adds count B and the selected fixed data, and supplies the resulting sum to RAM 13 as the lower addresses. Further second gate 53 generates upper addresses according to the binary code data produced from second selector 48 and supplies the addresses to RAM 13 through second output terminal 55. By the way, the memory area as to the upper address F, i.e. row F,is provided for storing four channel^{s} U28 to U31 other than channel U15 as shown in Figure 1, while it is able to store any number resulting from the raising of 2 to the nth power, i.e. 2ⁿ, where n is a positive integer.

In the above embodiment, there has been explained the present invention relating to an optical CD reproducing apparatus. However, it will be easily understood that the present invention is able to be applied for other apparatus for reproducing digital data with cross-interleaving processing. That is, the present invention is not restricted to the embodiments described above and shown, and various modifications and changes may be made without departing from the spirit and scope of the present invention.

## Claims (Claims for the following Contracting State(s): FR, DE, NL)

1. A method for deinterleaving cross-interleaved symbols wherein each symbol is subjected to a predetermined deinterleaving delay respectively corresponding to its channel (U₀ - U₃₁) and the symbols of the same channel are to have the same deinterleaving delay, by using a RAM (Random Access Memory) (13), part of whose memory space is arranged as a set of areas, for storing symbols, each area of the set having substantially the same predetermined storage capacity, such that at least one of the areas is used to accommodate symbols of a plurality of channels and such that the space of each area apart from any buffer storage space that might be included therein is substantially filled by its symbols the number of symbols being stored and belonging to same channel being dependent on the delay of the respective channel, symbols of said plurality of channels, (U12,U18) are written into and read out from the RAM (Random Access Memory) (13) within the same area without overlapping.

2. A method according to claim 1, a first write operation (DAIN) using a first counter (39) whose count forms a first address (DAIN (U12)), and
a second write operation (DAIN) using an adder (44) which forms the sum of said count of said first counter (39) and a predetermined constant as a second address (DAIN (U18)).

3. A method according to claim 2, wherein said first counter (39) is controlled by phase components extracted from an RF signal reproduced from a recording medium.

4. A method according to claim 3,
further comprising:
carrying out an error-correction operation (C₁) on said first symbol, using a second counter (41), which is controlled by a stable reference clock signal generated by a quartz oscillator, to form a third address (C1(U12)) for making said error-correction operation on said first symbol; and
carrying out an error-correction operation (C1) on said second symbol, using said adder (44) to form the sum of the count of said second counter (41) and a second predetermined constant as a fourth address (C1(U18)) for carrying out said error-correction operation on said second symbol.

5. A method according to claim 3 or 4,
wherein said constant has a value which is able to separate said second symbol from said first symbol in said area to prevent any mutual overlapping.

6. A method according to claim 4,
further comprising:
carrying out a first read operation on said first symbol, using said adder (44) to form the sum of the count of said second counter (41) and a third predetermined constant as a fifth address (DAOUT (U12)) for carrying out said first read operation of said first symbol; and
carrying out a second read operation on said second symbol, using said adder (44) to form the sum of the count of said second counter (41) and a fourth predetermined constant as a sixth address (DAOUT (U18)) for carrying out said second read operation of said second symbol.

7. A method according to claim 5 or 6, wherein said area is further allocated first and second buffer storage spaces respectively in front of spaces allocated for said first and second symbols.

8. A method according to claim 7, wherein said first and second addresses are respectively assigned to said first and second buffer storage spaces.

9. A method according to claim 7, wherein said first and third addresses are assigned to said first buffer storage space, and said second and fourth addresses are assigned to said second buffer storage space.

10. A method according to claim 7 when appendant to claim 6, wherein said first, third, and fifth addresses are assigned to said first buffer storage space, and said second, fourth, and sixth addresses are assigned to said second buffer storage space.

## Claims (Claims for the following Contracting State(s): GB)

1. A method for deinterleaving cross-interleaved symbols wherein each symbol is subjected to a predetermined deinterleaving delay respectively corresponding to its channel (U₀ - U₃₁) and the symbols of the same channel are to have the same deinterleaving delay, by using a RAM (Random Access Memory) (13), part of whose memory space is arranged as a single area or as a set of areas, for storing symbols, each area having substantially the same predetermined storage capacity, such that the space of each area apart from any buffer storage space that might be included therein is substantially filled by its symbols the number of symbols being stored and belonging to the same channel being dependent on the delay of the respective channel, symbols of said plurality of channels (U12) (U18) are written into and read out from the RAM (Random Access Memory) (13) within the same area without overlapping.

2. A method according to claim 1, a first write operation (DAIN) using a first counter (39) whose count forms a first address (DAIN (U12)), and
a second write operation (DAIN) using an adder (44) which forms the sum of said count of said first counter (39) and a predetermined constant as a second address (DAIN (U18)).

3. A method according to claim 2, wherein said first counter (39) is controlled by phase components extracted from an RF signal reproduced from a recording medium.

4. A method according to claim 3,
further comprising:
carrying out an error-correction operation (C₁) on said first symbol, using a second counter (41), which is controlled by a stable reference clock signal generated by a quartz oscillator, to form a third address (C1(U12)) for making said error-correction operation on said first symbol; and
carrying out an error-correction operation (C1) on said second symbol, using said adder (44) to form the sum of the count of said second counter (41) and a second predetermined constant as a fourth address (C1(U18)) for carrying out said error-correction operation on said second symbol.

5. A method according to claim 3 or 4,
wherein said constant has a value which is able to separate said second symbol from said first symbol in said area to prevent any mutual overlapping.

6. A method according to claim 4,
further comprising:
carrying out a first read operation on said first symbol, using said adder (44) to form the sum of the count of said second counter (41) and a third predetermined constant as a fifth address (DAOUT (U12)) for carrying out said first read operation of said first symbol; and
carrying out a second read operation on said second symbol, using said adder (44) to form the sum of the count of said second counter (41) and a fourth predetermined constant as a sixth address (DAOUT (U18)) for carrying out said second read operation of said second symbol.

7. A method according to claim 5 or 6, wherein said area is further allocated first and second buffer storage spaces respectively in front of spaces allocated for said first and second symbols.

8. A method according to claim 7, wherein said first and second addresses are respectively assigned to said first and second buffer storage spaces.

9. A method according to claim 7, wherein said first and third addresses are assigned to said first buffer storage space, and said second and fourth addresses are assigned to said second buffer storage space.

10. A method according to claim 7 when appendant to claim 6, wherein said first, third, and fifth addresses are assigned to said first buffer storage space, and said second, fourth, and sixth addresses are assigned to said second buffer storage space.

11. A method for deinterleaving cross-interleaved symbols wherein each symbol is subjected to a predetermined deinterleaving delay respectively corresponding to its channel (U₀ - U₃₁) and the symbols of the same channel are to have the same deinterleaving delay, by using a RAM (Random Access Memory) part of whose memory space is arranged as a set of areas, for storing symbols, each area of the set having Substantially the same predetermined storage capacity, such that at least one of the areas is used to accommodate symbols of a plurality of channels and such that the space of each area apart from any buffer storage space that might be included therein is Substantially filled by its symbols the number of symbols being stored and belonging to same channel being dependent on the delay of the respective channel, symbols of said plurality of channels (U12,U18) are written into and read out from the RAM (Random Access Memory) (13) within the same area without overlapping.

## Patentansprüche (Patentansprüche für folgende(n) Vertragsstaat(en): FR, DE, NL)

1. Verfahren zum Entschachteln kreuzverschachtelter Symbole, bei dem jedes Symbol einer vorbestimmten, jeweils mit seinem Kanal (U₀ - U₃₁) korrespondierenden Entschachtelungsverzögerung unterworfen wird und die Symbole des gleichen Kanals die gleiche Entschachtelungsverzögerung aufweisen, indem ein RAM (Speicher mit wahlfreiem Zugriff) (l3) verwendet wird, wobei ein Teil dessen Speicherraums als ein Satz von Bereichen zum Speichern von Symbolen angeordnet ist, wobei jeder Breich des Satzes im wesentlichen die gleiche vorbestimmte Speicherkapazität derart aufweist, daß wenigstens einer der Bereiche zur Aufnahme von Symbolen mehrerer Kanäle benutzt ist, und derart, daß der Speicherraum jedes Bereiches abgesehen von einem darin möglicherweise enthaltenen Pufferspeicherraum im wesentlichen mit seinen Symbolen gefüllt ist, wobei die Zahl der Symbole, die gespeichert werden und zum gleichen Kanal gehören, von der Verzögerung des jeweiligen Kanals abhängt, wobei Symbole der mehreren Kanäle (U12, U18) innerhalb des gleichen Bereichs ohne Überlappung in den RAM (Speicher mit wahlfreiem Zugriff) geschrieben und aus diesem gelesen werden.

2. Verfahren nach Anspruch 1, wobei eine erste Schreiboperation (DAIN) einen ersten Zähler (39), dessen Zählerstand eine erste Adresse (DAIN (Ul2)) bildet, benutzt, und eine zweite Schreiboperation (DAIN) einen Addierer (44), der die Summe aus dem Zählerstand des ersten Zählers (39) und einer vorbestimmten Konstante als eine zweite Adresse (DAIN (U18)) bildet, benutzt.

3. Verfahren nach Anspruch 2, wobei der erste Zähler (39) durch Phasenkomponenten gesteuert wird, die von einem von einem Aufzeichnungsmedium wiedergegebenen HF-Signal gewonnen werden.

4. Verfahren nach Anspruch 3, mit:
Ausführen einer Fehlerkorrekturoperation (C₁) bei dem ersten Symbol unter Verwendung eines zweiten Zählers (41), der durch ein von einem Quarzoszillator erzeugtes stabiles Referenztaktsignal gesteuert wird, um eine dritte Adresse (C1 (Ul2)) zum Ausführen der Fehlerkorrekturoperation bei dem ersten Symbol zu bilden, und Ausführen einer Fehlerkorrekturoperation (Cl) bei dem zweiten Symbol unter Verwendung des Addierers (44) zur Bildung der Summe aus dem Zählerstand des ersten Zählers (41) und einer zweiten vorbestimmten Konstante als eine vierte Adresse (Cl (U18)) zum Ausführen der Fehlerkorrekturoperation bei dem zweiten Symbol.

5. Verfahren nach Anspruch 3 oder 4, wobei die Konstante einen Werte aufweist, der in dem Bereich das zweite Symbol von dem ersten Symbol trennen kann, um jedwede gegenseitige Überlappung zu verhindern.

6. Verfahren nach Anspruch 4, mit:
Ausführen einer ersten Leseoperation bei dem ersten Symbol unter Verwendung des Addierers (44) zur Bildung der Summe aus dem Zählerstand des zweiten Zählers (41) und einer dritten vorbestimmten Konstante als einer fünften Adresse (DAOUT (U12)) zum Ausführen der ersten Leseoperation des ersten Symbols und
Ausführen einer zweiten Leseoperation bei dem zweiten Symbol unter Verwendung des Addierers (44) zur Bildung der Summe aus dem Zählerstand des zweiten Zählers (41) und einer vierten vorbestimmten Konstante als einer sechsten Adresse (DAOUT (U18)) zum Ausführen der zweiten Leseoperation des zweiten Symbols.

7. Verfahren nach Anspruch 5 oder 6, wobei dem Bereich vor Speicherräumen, die dem ersten und zweiten Symbol zugeordnet sind, ein erster bzw. ein zweiter Pufferspeicherraum zugeordnet ist.

8. Verfahren nach Anspruch 7, wobei die erste und die zweite Adresse dem ersten bzw. zweiten Pufferspeicherraum zugeordnet ist.

9. Verfahren nach Anspruch 7, wobei die erste und dritte Adresse dem ersten Pufferspeicherraum zugeordnet sind, und die zweite und vierte Adresse dem zweiten Pufferspeicherraum zugeordnet sind.

10. Verfahren nach Anspruch 7 bei Abhängigkeit von Anspruch 6, wobei die erste, dritte und fünfte Adresse dem ersten Pufferspeicherraum zugeordnet sind und die zweite, vierte und sechste Adresse dem zweiten Pufferspeicherraum zugeordnet sind.

## Patentansprüche (Patentansprüche für folgende(n) Vertragsstaat(en): GB)

1. Verfahren zum Entschachteln kreuzverschachtelter Symbole, bei dem jedes Symbol einer vorbestimmten, jeweils mit seinem Kanal (U₀ - U₃₁) korrespondierenden Entschachtelungsverzögerung unterworfen wird und die Symbole des gleichen Kanals die gleiche Entschachtelungsverzögerung aufweisen, indem ein RAM (Speicher mit wahlfreiem Zugriff) (13) verwendet wird, wobei ein Teil dessen Speicherraums als ein Bereich oder ein Satz von Bereichen zum Speichern von Symbolen angeordnet ist, wobei jeder Bereich im wesentlichen die gleiche vorbestimmte Speicherkapazität derart aufweist, daß der Speicherraum jedes Bereiches abgesehen von einem darin möglicherweise enthaltenen Pufferspeicherraum im wesentlichen mit seinen Symbolen gefüllt ist, wobei die Zahl der Symbole, die gespeichert werden und zum gleichen Kanal gehören, von der Verzögerung des jeweiligen Kanals abhängt, wobei Symole der mehreren Kanäle (U12, U18) innerhalb des gleichen Bereichs ohne Überlappung in den RAM (Speicher mit wahlfreiem Zugriff) geschrieben und aus diesem gelesen werden.

2. Verfahren nach Anspruch l, wobei eine erste Schreiboperation (DAIN) einen ersten Zähler (39), dessen Zählerstand eine erste Adresse (DAIN (U12)) bildet, benutzt, und eine zweite Schreiboperation (DAIN) einen Addierer (44), der die Summe aus dem Zählerstand des ersten Zählers (39) und einer vorbestimmten Konstante als eine zweite Adresse (DAIN (U18)) bildet, benutzt.

3. Verfahren nach Anspruch 2, wobei der erste Zähler (39) durch Phasenkomponenten gesteuert wird, die von einem von einem Aufzeichnungsmedium wiedergegebenen HF-Signal gewonnen werden.

4. Verfahren nach Anspruch 3, mit:
Ausführen einer Fehlerkorrekturoperation (C₁) bei dem ersten Symbol unter Verwendung eines zweiten Zählers (41), der durch ein von einem Quarzoszillator erzeugtes stabiles Referenztaktsignal gesteuert wird, um eine dritte Adresse (C1 (U12)) zum Ausführen der Fehlerkorrekturoperation bei dem ersten Symbol zu bilden, und Ausführen einer Fehlerkorrekturoperation (C1) bei dem zweiten Symbol unter Verwendung des Addierers (44) zur Bildung der Summe aus dem Zählerstand des ersten Zählers (41) und einer zweiten vorbestimmten Konstante als eine vierte Adresse (C1 (U18)) zum Ausführen der Fehlerkorrekturoperation bei dem zwieten Symbol.

5. Verfahren nach Anspruch 3 oder 4, wobei die Konstante einen Wert aufweist, der in dem Bereich das zweite Symbol von dem ersten Symbol trennen kann, um jedwede gegenseitige Überlappung zu verhindern.

6. Verfahren nach Anspruch 4, mit:
Ausführen einer ersten Leseoperation bei dem ersten Symbol unter Verwendung des Addierers (44) zur Bildung der Summe aus dem Zählerstand des zweiten Zählers (41) und einer dritten vorbestimmten Konstante als einer fünften Adresse (DAOUT (U12)) zum Ausführen der ersten Leseoperation des ersten Symbols und
Ausführen einer zweiten Leseoperation bei dem zweiten Symbol unter Verwendung des Addierers (44) zur Bildung der Summe aus dem Zählerstand des zweiten Zählers (41) und einer vierten vorbestimmten Konstante als einer sechsten Adresse (DAOUT (Ul8)) zum Ausführen der zweiten Leseoperation des zweiten Symbols.

7. Verfahren nach Anspruch 5 oder 6, wobei dem Bereich vor Speicherräumen, die dem ersten und zweiten Symbol zugeordnet sind, ein erster bzw. ein zweiter Pufferspeicherraum zugeordnet ist.

8. Verfahren nach Anspruch 7, wobei die erste und die zweite Adresse dem ersten bzw. zweiten Pufferspeicherraum zugeordnet ist.

9. Verfahren nach Anspruch 7, wobei die erste und dritte Adresse dem ersten Pufferspeicherraum zugeordnet sind, und die zweite und vierte Adresse dem zweiten Pufferspeicherraum zugeordnet sind.

10. Verfahren nach Anspruch 7 bei Abhängigkeit von Anspruch 6, wobei die erste, dritte und fünfte Adresse dem ersten Pufferspeicherraum zugeordnet sind und die zweite, vierte und sechste Adresse dem zweiten Pufferspeicherraum zugeordnet sind.

11. Verfahren zum Entschachteln kreuzverschachtelter Symbole, bei dem jedes Symbol einer vorbestimmten, jeweils mit seinem Kanal (U₀ - U₃₁) korrespondierenden Entschachtelungsverzögerung unterworfen wird und die Symbole des gleichen Kanals die gleiche Entschachtelungsverzögerung aufweisen, indem ein RAM (Speicher mit wahlfreiem Zugriff) (13) verwendet wird, wobei ein Teil dessen Speicherraums als ein Satz von Bereichen zum Speichern von Symbolen angeordnet ist, wobei jeder Breich des Satzes im wesentlichen die gleiche vorbestimmte Speicherkapazität derart aufweist, daß wenigstens einer der Bereiche zur Aufnahme von Symbolen mehrerer Kanäle benutzt ist, und derart, daß der Speicherraum jedes Bereiches abgesehen von einem darin möglicherweise enthaltenen Pufferspeicherraum im wesentlichen mit seinen Symbolen gefüllt ist, wobei die Zahl der Symbole, die gespeichert werden und zum gleichen Kanal gehören, von der Verzögerung des jeweiligen Kanals abhängt, wobei Symbole der mehreren Kanäle (U12, U18) innerhalb des gleichen Bereichs ohne Überlappung in den RAM (Speicher mit wahlfreiem Zugriff) geschrieben und aus diesem gelesen werden.

## Revendications (Revendications pour l'(les) Etat(s) contractant(s) suivant(s): FR, DE, NL)

1. Un procédé pour désimbriquer des symboles en imbrication croisée, dans lequel chaque symbole est soumis à un retard de désimbrication prédéterminé correspondant respectivement à son canal (U₀ - U₃₁) et les symboles du même canal doivent avoir le même retard de désimbrication, en utilisant une RAM (mémoire vive) (13), dont une partie de l'espace mémoire est disposée en un jeu de zones, afin de mémoriser les symboles, chaque zone du jeu ayant pratiquement la même capacité de mémorisation prédéterminée, de sorte qu'au moins une des zones est utilisée pour recevoir les symboles d'un ensemble de canaux et de sorte que l'espace de chaque zone, excepté tout espace mémoire tampon qui peut être inclus à l'intérieur, soit pratiquement chargé par ses symboles, le nombre des symboles mémorisés et appartenant au même canal dépendant du retard du canal respectif, les symboles dudit ensemble de canaux (U12, U18) sont entrés en écriture et sortis en lecture de la RAM (mémoire vive) (13) à l'intérieur de la même zone sans se chevaucher.

2. Un procédé selon la revendication 1, une première opération d'écriture (DAIN) utilisant un premier compteur (39) dont le compte forme une première adresse (DAIN (U12)), et
une seconde opération d'écriture (DAIN) utilisant un additionneur (44) qui forme la somme dudit compte dudit premier compteur (39) et d'une constante prédéterminée en tant que seconde adresse (DAIN (U18)).

3. Un procédé selon la revendication 2, dans lequel ledit premier compteur (39) est commandé par des composantes de phase extraites d'un signal HF reproduit à partir d'un milieu d'enregistrement.

4. Un procédé selon la revendication 3, comprenant de plus les opérations consistant à :
effectuer une opération de correction d'erreurs (C₁) sur ledit premier symbole, en utilisant un second compteur (41), qui est commandé à l'aide d'un signal d'horloge de référence stable, engendré par un oscillateur à quartz, pour former une troisième adresse (C1(U12)) pour établir ladite opération de correction d'erreurs sur ledit premier symbole ; et
effectuer une opération de correction d'erreurs (C1) sur ledit second symbole, en utilisant ledit additionneur (44) pour former la somme du compte dudit second compteur (41) et d'une seconde constante prédéterminée en tant que quatrième adresse (C1(U18)) pour effectuer ladite opération de correction d'erreurs sur ledit second symbole.

5. Un procédé selon la revendication 3 ou 4, dans lequel ladite constante a une valeur qui peut séparer ledit second symbole dudit premier symbole dans ladite zone pour empêcher tout chevauchement mutuel.

6. Un procédé selon la revendication 4, comprenant de plus les opérations consistant à :
effectuer une première opération de lecture sur ledit premier symbole, en utilisant ledit additionneur (44) pour former la somme du compte dudit second compteur (41) et d'une troisième constante prédéterminée en tant que cinquième adresse (DAOUT(U12)) pour effectuer ladite première opération de lecture dudit premier symbole ; et
effectuer une seconde opération de lecture sur ledit second symbole, en utilisant ledit additionneur (44) pour former la somme du compte dudit second compteur (41) et d'une quatrième constante prédéterminée en tant que sixième adresse (DAOUT(U18)) pour effectuer ladite seconde opération de lecture dudit second symbole.

7. Un procédé selon la revendication 5 ou 6, dans lequel ladite zone est de plus affectée de premier et second espaces de mémoire tampon respectivement en face des espaces affectés pour lesdits premier et second symboles.

8. Un procédé selon la revendication 7, dans lequel lesdites première et seconde adresses sont respectivement affectées auxdits premier et second espaces de mémoire tampon.

9. Un procédé selon la revendication 7, dans lequel lesdites première et troisième adresses sont affectées audit premier espace de mémoire tampon, et lesdites seconde et quatrième adresses sont affectées audit second espace de mémoire tampon.

10. Un procédé selon la revendication 7 quand elle est dépendante de la revendication 6, dans lequel lesdites première, troisième et cinquième adresses sont affectées audit premier espace de mémoire tampon, et lesdites seconde, quatrième et sixième adresses sont affectées audit second espace de mémoire tampon.

## Revendications (Revendications pour l'(les) Etat(s) contractant(s) suivant(s): GB)

1. Un procédé pour désimbriquer des symboles en imbrication croisée, dans lequel chaque symbole est soumis à un retard de désimbrication prédéterminé correspondant respectivement à son canal (U₀ - U₃₁) et les symboles du même canal doivent avoir le même retard de désimbrication, en utilisant une RAM (mémoire vive) (13), dont une partie de l'espace de la mémoire est disposée en une zone unique ou en un jeu de zones, afin de mémoriser les symboles, chaque zone ayant pratiquement la même capacité de mémorisation prédéterminée, de sorte que l'espace de chaque zone, excepté tout espace de mémoire tampon qui peut être inclus à l'intérieur, soit pratiquement chargé par ses symboles, le nombre des symboles mémorisés et appartenant au même canal dépendant du retard du canal respectif, les symboles dudit ensemble de canaux (U12, U18) sont entrés en écriture et sortis en lecture de la RAM (mémoire vive) (13) à l'intérieur de la même zone sans se chevaucher.

2. Un procédé selon la revendication 1, une première opération d'écriture (DAIN) utilisant un premier compteur (39) dont le compte forme une première adresse (DAIN (U12)), et
une seconde opération d'écriture (DAIN) utilisant un additionneur (44) qui forme la somme dudit compte dudit premier compteur (39) et une constante prédéterminée en tant que seconde adresse (DAIN (U18)).

3. Un procédé selon la revendication 2, dans lequel ledit premier compteur (39) est commandé par des composantes de phase extraites d'un signal HF reproduit à partir d'un milieu d'enregistrement.

4. Un procédé selon la revendication 3, comprenant de plus les opérations consistant à :
effectuer une opération de correction d'erreurs (C₁) sur ledit premier symbole, en utilisant un second compteur (41), qui est commandé à l'aide d'un signal d'horloge de référence stable, engendré par un oscillateur à quartz, pour former une troisième adresse (C1(U12)) pour établir ladite opération de correction d'erreurs sur ledit premier symbole ; et
effectuer une opération de correction d'erreurs (C1) sur ledit second symbole, en utilisant ledit additionneur (44) pour former la somme du compte dudit second compteur (41) et d'une seconde constante prédéterminée en tant que quatrième adresse (C1(U18)) pour effectuer ladite opération de correction d'erreurs sur ledit second symbole.

5. Un procédé selon la revendication 3 ou 4, dans lequel ladite constante a une valeur qui peut séparer ledit second symbole dudit premier symbole dans ladite zone pour empêcher tout chevauchement mutuel.

6. Un procédé selon la revendication 4, comprenant de plus les opérations consistant à :
effectuer une première opération de lecture sur ledit premier symbole, en utilisant ledit additionneur (44) pour former la somme du compte dudit second compteur (41) et d'une troisième constante prédéterminée en tant que cinquième adresse (DAOUT(U12)) pour effectuer ladite première opération de lecture dudit premier symbole ; et
effectuer une seconde opération de lecture sur ledit second symbole, en utilisant ledit additionneur (44) pour former la somme du compte dudit second compteur (41) et d'une quatrième constante prédéterminée en tant que sixième adresse (DAOUT(U18)) pour effectuer ladite seconde opération de lecture dudit second symbole.

7. Un procédé selon la revendication 5 ou 6, dans lequel ladite zone est de plus affectée de premier et second espaces de mémoire tampon respectivement en face des espaces affectés pour lesdits premier et second symboles.

8. Un procédé selon la revendication 7, dans lequel lesdites première et seconde adresses sont respectivement affectées auxdits premier et second espaces de mémoire tampon.

9. Un procédé selon la revendication 7, dans lequel lesdites première et troisième adresses sont affectées audit premier espace de mémoire tampon, et lesdites secondes et quatrième adresses sont affectées audit second espace de mémoire tampon.

10. Un procédé selon la revendication 7 quand elle est dépendante de la revendication 6, dans lequel lesdites première, troisième et cinquième adresses sont affectées audit premier espace de mémoire tampon, et lesdites seconde, quatrième et sixième adresses sont affectées audit second espace de mémoire tampon.

11. Un procédé pour désimbriquer des symboles en imbrication croisée, dans lequel chaque symbole est soumis à un retard de désimbrication prédéterminé correspondant respectivement à son canal (U₀ - U₃₁) et les symboles du même canal doivent avoir le même retard de désimbrication, en utilisant une RAM (mémoire vive), dont une partie de l'espace mémoire est disposée en un jeu de zones, afin de mémoriser les symboles, chaque zone du jeu ayant pratiquement la même capacité de mémorisation prédéterminée, de sorte qu'au moins une des zones est utilisée pour recevoir les symboles d'un ensemble de canaux et de sorte que l'espace de chaque zone, excepté tout espace de mémoire tampon qui peut être inclus à l'intérieur, soit pratiquement chargé par ses symboles, le nombre des symboles mémorisés et appartenant au même canal dépendant du retard du canal respectif, les symboles dudit ensemble de canaux (U12, U18) sont entrés en écriture et sortis en lecture de la RAM (mémoire vive) (13) à l'intérieur de la même zone sans se chevaucher.
